(19) Europäisches Patentamt
European Patent Office
Office européen des brevets

(11) Publication number: 0 247 692 B1

(12) **EUROPEAN PATENT SPECIFICATION**

(45) Date of publication of the patent specification: **18.07.90**

(51) Int. Cl.[5]: **C08G 18/18,** C08G 18/38, C08G 18/44, C08G 18/80

(21) Application number: **87200964.2**

(22) Date of filing: **21.05.87**

(54) **Elastomeric fluid compositions, crosslinking in the presence of ambient humidity, suitable for use in sealants.**

(30) Priority: **29.05.86 IT 2060786**

(43) Date of publication of application: **02.12.87 Bulletin 87/49**

(45) Publication of the grant of the patent: **18.07.90 Bulletin 90/29**

(84) Designated Contracting States: **AT BE CH DE ES FR GB GR IT LI LU NL SE**

(56) References cited:
**FR-A- 2 022 226**
**FR-A- 2 391 235**
**US-A- 3 715 338**

(73) Proprietor: **ENICHEM SYNTHESIS S.p.A., Via Ruggero Settimo 55, I-90139 Palermo(IT)**

(72) Inventor: **Greco, Alberto, Via Mughetti 2, I-20077 Dresano Milan(IT)**
Inventor: **Lugli, Gabriele, Via M. Cefalonia 41, I-20097 San Donato Milanese Milan(IT)**

(74) Representative: **Roggero, Sergio et al, Ing. Barzanò & Zanardo Milano S.p.A. Via Borgonuovo 10, I-20121 Milano(IT)**

**EP 0 247 692 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to elastomeric fluid compositions, crosslinking in the presence of ambient humidity, to the process for preparing them, and to their use in the field of sealants.

Elastomeric bases, functionalized at their chain ends by means of reactive groups, are known in the art, which are fluid under the ambient conditions, and are capable of crosslinking, under the effect of the atomspheric humidity, to yield solid and rubber-like products, endowed with interesting characteristics, and however such as to make them useful in the field of sealants.

Elastomeric fluid bases, crosslinking under the ambient conditions, and hence still useful in the field of sealants are disclosed in US patents No. 3 715 338 and No. 3 621 000. These elastomeric bases are constituted by elastomeric fluid polymers containing arylcarbamate end groups, or blocked isocyanate end groups, and are used as mixtures with such potential crosslinking agents as ketimines, hexamines and ketiminoenamines.

The above-cited elastomeric bases are furthermore used, in the sealant compositions, in combination with one or more of the following additives: extender pigments (such as calcium carbonate), reinforcer fillers (such as pyrogenic silica), covering pigments (such as titanium dioxide), thixotropic agents, stabilizer agents (such as antioxidants and U.V. absorbers) and small amounts of a catalyst suitable to accelerate the crosslinking.

The use of such fluid compositions in sealants, in particular in car, building and glass industry, is based on the release, by the atmospheric humidity, of reactive groups which either by condensation or by reaction with suitable molecules crosslink to yield solid and rubber-like products.

In case of elastomeric bases terminated with arylcarbamic groups, or blocked isocyanate groups, the crosslinking agent is the diamine or triamine which is released from ketimines or ketiminoenamines under the action of humidity, and which displace the blocked group blocking agent, with the consequent formation of substituted ureic groups.

The fluid compositions which contain elastomeric bases with arylcarbamate end groups, or blocked isocyanate end groups, together with ketimines, do not show some disadvantages typical of the urethanic sealants crosslinkable in the presence of ambient humidity.

Such disadvantages of the urethanic sealants consist mainly in the impossibility of using fillers or pigments which are not perfectly compatible and anhydrous, and this in view of the strong reactivity of isocyanate group, in the evolving of gas bubbles during the crosslinking step, in the poor pot stability and in the possibility of undesired polymerization reaction, catalysed by a possible excess of amino groups which are released from the isocyanate group by the effect of ambient humidity.

But the use of fluid compositions containing elastomeric bases with arylcarbamate or blocked isocyanate functional end groups shows the disadvantage deriving from a low crosslinking rate of the sealant material, above all in case of use of aliphatic diisocyanates in the preparation of the elastomeric basis.

This latter is in fact usually prepared by reacting a suitable polymer-diol with a diisocyanate, and then blocking the isocyanate end groups with a phenol or substituted phenol.

In practice, only the elastomeric bases prepared from aromatic diisocyanates, in combination with the ketimines, are able to crosslink at an acceptable rate in contact with the ambient humidity.

However, to such an advantage inherent in the use of aromatic diisocyanates the disadvantage opposes which derives from the worsening of a few characteristics of the elastomeric basis and of the related fluid and crosslinkable composition, especially in relation to the characteristics of lower resistance to U.V. ageing and of viscosity, which assumes undesirably high values. This phenomenon is particularly exalted in case of use of a polycarbonate-diol or of a polyester-diol, which show generally, by themselves, rather high viscosity values (10-50 Pa.s at 25°C) even at relatively low molecular weights (1,000-3,000). In this case, it would be highly desirable to use aliphatic diisocyanates for producing elastomeric bases with arylcarbamate end groups, which have a viscosity comprised within an acceptable range of values, such as within the range of from 100 to 700 Pa.s. But it was observed that such elastomeric bases, as well as those containing a polybutadiene or a polycaprolactone, once placed in the presence of bisketimines and under ambient conditions of temperature and humidity, show very low crosslinking rates, with setting times longer than 30 days, hence clearly unacceptable for practical uses. It was furthermore observed that the usual catalysts in urethane chemistry, such as, e.g., the tertiary amines and some organometallic compounds, in particular of tin, do not practically yield any benefits in accelerating the crosslinking.

FR-A 2 022 226 relates to compositions curable under ambient conditions by atmospheric moisture comprising a polyurethane prepolymer of an aliphatic diisocyanate and an amidine catalyst.

FR-A 2 391 235 demonstrates that amidine catalysts are effective in catalysing the reaction of phenol-blocked carbamate groups with polyamines.

A purpose of this invention is to overbome the drawbacks of the prior art referred to above, by providing sealant elastomeric fluid compositions having a high cross-linking rate under ambient temperature and humidity conditions and having a high resistance to ageing.

Therefore, this invention provides:

Sealant elastomeric fluid compositions which can be cross-linked under ambient temperature and humidity conditions, comprising:

A) an elastomeric polymer consisting of an elastomeric base of aliphatic polycarbonate bearing functional phenylcarbamate or substituted phenylcarbamate groups and having a molecular weight form 500 to 3000;

B) a compound selected from among:

– compounds having the general formula:

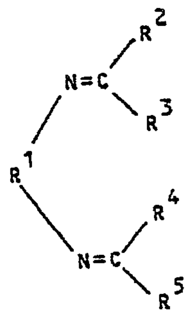

(I)

– compounds having the general formula:

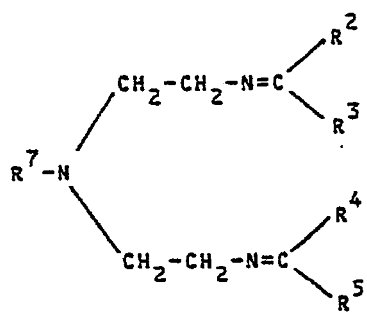

(II)

– compounds having the general formula:

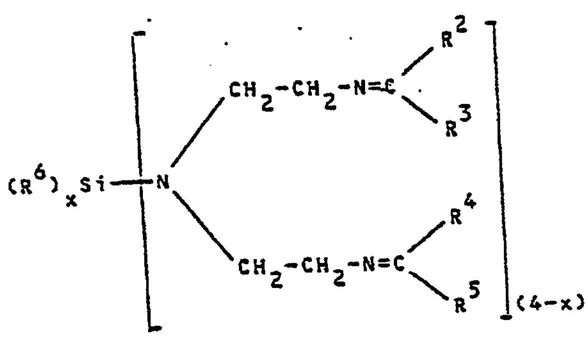

(III)

wherein:

$R^1$ is an alkylene group having from 1 to 10 carbon atoms;

$R^2$, $R^3$, $R^4$ and $R^5$ are, independently from each other, an alkyl group of from 1 to 10 carbon atoms, or the couples $R^2$–$R^3$, and $R^4$–$R^5$, considered conjointly with the carbon atoms whereto they are bonded, form a 5-membered, or a 6-membered cycloaliphatic ring;

$R^6$ is selected from among alkyl groups containing from 1 to 10 carbon atoms, the vinyl group and the phenyl group;

$R^7$ is a cyclopentene or cyclohexene radical, and

$\underline{x}$ is 1 or 2;

C) a compound having the general formula:

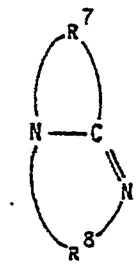

(IV)

wherein:
$R^7$ and $R^8$ are optionally alkyl- or aryl substituted alkylenes containing from 3 to 5 carbon atoms, or either $R^7$ or $R^8$ is the $-(CH_2)_3-NH$ radical.

Preferably, the (B) component is present in the amount which supplied a maximum of 2 total ketimino and enamino groups per each arylcarbamate group in the (A) component, and the (C) component is present in an amount of at least 0.5 parts by weight per each 100 parts by weight of the (A) component.

The A Component

The (A) component in the elastomeric fluid compositions of the present invention is constituted by an elastomeric basis of aliphatic polycarbonate, bearing functional phenylcarbamate of (substituted phenyl)-carbamate end groups.

Said (A) component is obtained from a polyol, and preferably, diol of polycarbonate, which is reacted with a preferably aliphatic diisocyanate, e.g., isophoronediisocyanate, to obtain the corresponding polymer with isocyanate end groups, which are blocked by means of the reaction with phenol or with a substituted phenol, e.g., a p-alkyl-phenol, containing from 1 to 10 carbon atoms in its alkyl group.

The polycarbonate-diol, useful to the purposes of the present invention, can be obtained by means of the reaction of glycols with phosgene, in the presence of hydrochloric acid acceptors, or, preferably, by the transesterification of glycols with alkyl, allyl or aryl carbonates, e.g., as disclosed in U.S. patents No. 2,843,567; No. 2,789,964; and No. 3,544,524.

Another route to the polycarbonate-diols is that which is based on the addition of carbon dioxide to glycols, in the presence of Lewis acids, or in the presence of some combinations of aluminum and zinc compounds soluble in water, as described, e.g., by Inovoe et al. in Makromol. Chem. 130, 210 (1969) and by Barba et al. in Makromol. Chemie, Rapid Communications, 5, 665 (1984). A further route is that which provides the opening of the cyclic carbonates, in the presence of basic catalysts, as disclosed in U.K. patent No. 872,473.

The polycarbonate-diols used in the process of the present invention are those of aliphatic type, and, in particular those of elastomeric type, with a low glass transition temperature, and with a melting point lower than room temperature (20-25°C).

More particularly, the preferred polycarbonates are the polymers of hexanediol-1,6 with one of the following glycols: butanediol-1,3; butanediol-1,4; pentanediol-1,5; decanediol-1,10; dodecanediol-1,12; neopenyl glycol; hexanediol-2,5; 4,8-bis-hydroxymethyltricyclo-(5,2,1,0 $^{2.6}$)-decane; 1,4-bis-hydroxymethylcyclohexane, wherein hexanediol-1,6 constitutes at least 50% by mol relatively to used glycols.

Another type of preferred polycarbonate is the polyether-polycarbonate, obtained from triethyleneglycol with such glycols as butanediol-1,3 and butanediol-1,4;

diethyleneglycol and di-propyleneglycol, wherein the triethyleneglycol constitutes at least 50% by mol relatively to the used glycols.

The first preferred class of polycarbonate-diols shows a glass transition temperature of from −50° to −60°C, and the second, of from −35° to −45°C.

All of the polycarbonates belonging to these classes may show a value of number average molecular weight of from 500 to 3,000.

Within this range of molecular weights, the polycarbonate-diols show a viscosity which can be as high as 200 $Ng/m^2$ (200,000 cps), at room temperature, for the higher molecular weights. The preferred viscosities are however those comprised within the range of from 5 to 100 $Ng/m^2$ (5,000 to 100,000 cps), always measured at room temperature (25°C).

The polyether-diols, useful to the purposes of the present invention, can be obtained by means of the anionic polymerization of epoxides in the presence of glycols or of polyvalent alcohols. Suitable catalysts to that purpose are tertiary amines and potassium hydroxide.

The polymerization can be carried out in such a way as to produce block-polymers, and this technique is particularly useful when introducing primary hydroxy groups is desired, by introducing ethylene oxide into the end reaction step. The most used epoxides to this purpose are propylene oxide, butylene oxide, cyclohexene oxide, allylglycidylether and styrene oxide. As an alternative, the epoxides can be polymerized with Lewis acids, such as boron trifluoride, perchloric acid and etherated boron trifluoride, aluminum-alkyls or zinc-alkyls in combination with water.

The aliphatic polycarbonate-diols are capable of producing an (A) component endowed with a higher resistance to oxidation, to the hydrolysis, to U.V. light and to ageing in general that which renders the same (A) component particularly suitable for the production of sealant compositions for outdoor applications.

According to the present invention, the polymer diol is reacted with a diisocyanate, in particular with an aliphatic isocyanate, with the ratio of -NCO groups to -OH groups being kept within the range of from 2/1 to 5/1 and preferably of from 2/1 to 3/1. The reaction is generally carried out without catalysts, at temperature generally not exceeding 75°C.

Especially in case of polycarbonate-diols with higher viscosities it is preferable to carry out the reaction in the presence of small amounts of plastifiers and/or solvents. Alkyl carbonates, such as dibutylcarbonate, ethyleneglycol monobutylether carbonate, dihexylcarbonate or hexanediol dibutylcarbonate have shown to be suitable to that purpose. Other conventional plasticizers can be alternatively used, albeit they are compatible with the carbonate-diols.

When all of the hydroxy groups of the polymer or polyol have reacted with the isocyanate groups, the still free isocyanate groups are blocked with phenol or phenol derivatives, by preferably operating in the presence of a catalyst, at a temperature generally not exceeding 75°C.

Without a catalyst, higher temperature, which can be as high as about 120°C, are required. The phenol amount is that as required by the stoichiometry due to the unaltered isocyanate groups, or a slight excess thereof, as compared to the stoichiometric amount.

The preferred diisocyanates in the preparation of (A) component are isophorone-diisocyanate and hexamethylene-diisocyanate, but diphenylmethane-diisocyanate, the corresponding ring-hydrogenated compound of this latter diisocyanate, and toluene-diisocyanate (isomer mixture) can be used as well.

The preferred phenols used in the preparation of (A) component are alkylphenols (e.g., nonylphenol, decylphenol and dodecylphenol), but also derivatives of cresol, nitrophenol and hydroxyalkylbenzoates can be used.

The catalysts used in the reaction of blocking of the isocyanate group are normally selected fron tertiary amines and organometallic compounds, such as tin dibutyllaurate or dioctanoate, titanium tetrabutyloxy and lead or cobalt octanoate.

The (A) component of the composition of the present invention can be represented by the general formula:

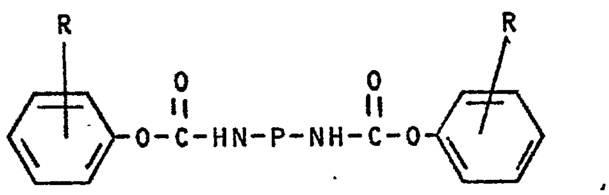

wherein P is the macromolecule of a polycarbonate-urethane and R is hydrogen or preferably an alkyl of from 1 to 20 carbon atoms.

## The B Component

The (B) component of the composition of the present invention is an organic compound containing in its molecule at least two –N=C< groups.

More particularly, this component, which performs the function of crosslinking agent, can be selected from:

– compounds having the formula:

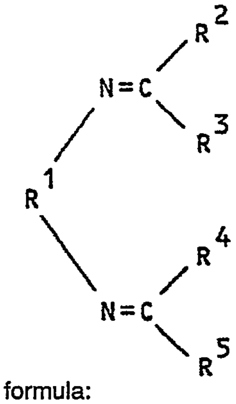

(I)

– compounds having the formula:

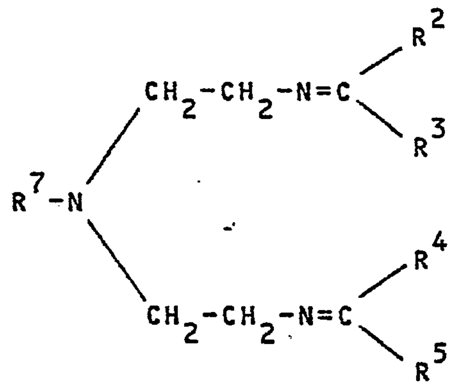

(II)

– compounds having the formula:

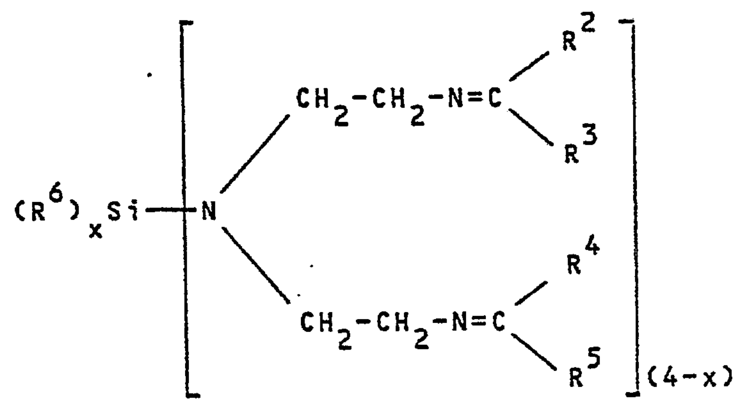

(III)

wherein:

$R^1$ represents an alkylene group of from 1 to 10 carbon atoms;

$R^2$, $R^3$, $R^4$ and $R^5$ represent, independently from one another, an alkyl group of from 1 to 10 carbon atoms, or the couples $R^2$, $R^3$ and $R^4$, $R^5$, considered jointly with the carbon atoms they are bonded to, form a 5-member or 6-member cycloaliphatic ring;

$R^6$ represents an alkyl group containing from 1 to 10 carbon atoms, the vinyl group or the phenyl group;

$R^7$ represents the cyclopentene or cyclohexene radical;

x assumes the value 1 or 2.

In the preferred form of practical embodiment, $R^1$ represents an ethylidene group; $R^2$, $R^3$, and $R^4$, $R^5$ represent, jointly, the cyclohexane radical; $R^6$ represents the vinyl or methyl group; $R^7$ represents the cyclohexene radical; and x is 1 or 2.

The compounds of the formulae (I) and (II) can be prepared generally by reacting amines with carbonyl compounds. When such a carbonyl compound is a ketone, the reaction proceeds easily in the absence of catalysts, but it can be anyway favoured by the presence of acidic catalaysts, such as p-toluenesulphonic acid and sulphonated acidic resins. Typical amines used to that purpose are ethylenediamine, triethylenediamine, piperazine and the addition product of two piperazine molecules and one molecule of adipic acid. Among the carbonyl compounds, cyclopentanone, cyclohexanone, acetone and methylethylketone are preferred.

The reaction is favoured by removing water which forms as the reaction byproduct, e.g., by means of azeotropic distillation with an added hydrocarbon solvent, such as benzene, toluene and xylene.

The compounds of formula (III) which constitute the preferred crosslinking agents, can be produced by starting from the polyaminic compounds, such as, e.g., diethylenetriamine, blocking with ketimino groups a portion of the amino groups, according to as disclosed above, and then reacting them with halosilanes in the presence of hydrogen halide acid acceptors. According to an alternative route, the ketimino-amine intermediates can be reacted with alkoxysilanes, with the alcohol being removed from the reaction. According to a further alternative, said ketimino-amines are reacted with silicon hydrides and in this case the reaction, which releases hydrogen, takes place in the presence of catalysts, such as chloroplatinic acid.

Among the halosilanes useful to that purpose, herein reminded are dimethylchlorosilane, methyltrichlorosilane, vinyltrichlorosilane and phenyltrichlorosilane. As the hydrogen halide acid acceptors, the tertiary amines and orthoformates may be mentioned.

Among the alkoxysilanes, dimethyldialkoxysilane, methyltrialkoxysilane, phenyltrialkoxysilane and vinyltrialkoxysilane are mentioned.

As the silicon hydride, phenylhydroxysilane can be used. In the composition of the present invention, the (B) component is present in the amount which supplies a maximum of two total ketimino and enamino groups, and preferably from 0.5 to 1.5 of such groups per each arylcarbamate group in the (A) component.

<u>The (C) Component</u>

The (C) component of the composition of the present invention is a tertiary amine with strained nitrogen, and with a ketiminic carbon atom bonded to the nitrogen atom, and is preferably a compound, having the general structure:

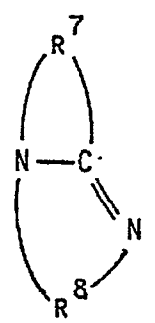

(IV)

wherein

$R^7$ and $R^8$ are alkylene radicals, containing from 3 to 5 carbon atoms (possibly substituted with alkyl or aryl groups) or either of $R^7$ or $R^8$ is the $-(CH_2)_3-NH-$ radical. Examples of such compounds are:

1,5.diazabicyclo(4.3.0)non-5-ene

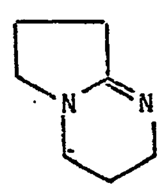

1,5-diazabicyclo(5,4.0)undec-7-ene

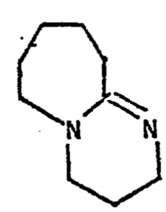

3-phenyl-1,4-diazabicyclo(4.3.0)non-4-ene

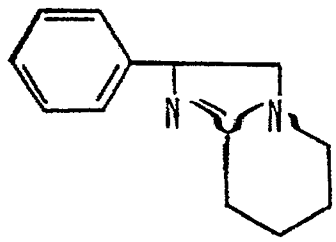

4-phenyl-1,5-diazabicyclo(4.4.0)dec-5-ene

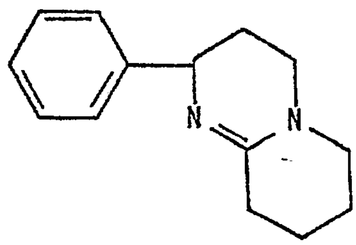

1,5,7-triazabicyclo[4.4.0]dec-5-ene

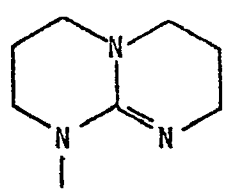

1,5-diazabicyclo(5,4,0)undec-7-ene can be prepared by reacting caprolactam and acrylonitrile (Michael reaction) and catalytically reducing with hydrogen the so-obtained reaction product, as described by H. Oediger and H. Moller in Angew. Chem., 79, 53 (1967).

In a similar way, 1,5-diazabicyclo(4,3,0)-non-5-ene can be prepared by starting from butyrolactam. Other like compounds are described in Tetrahedron Letters, 51, 5175–7 (1967).

The compound (IV) which performs the function of catalyst, is present in the composition of the present invention is amounts of at least 0.5 parts by weight, and generally of from 0.5 to 2 parts by weight per each 100 parts by weight of (A) component.

Larger catalyst amounts are not generally necessary, but, if present, they do not endanger, within wide limits, the characteristics of the compositions and of the related crosslinking products. The preferred catalyst is 1,5-diaza(5,4.0)undec-7-ene.

## The Composition

The elastomeric fluid composition crosslinkable in the presence of ambient humidity according to the present invention is obtained by blending the above indicated (A), (B) and (C) components, in such relative proportions as already spedified.

Besides these basic components, the composition may contain one or more usual additives selected from plasticizers (to the purpose of reducing the viscosity), inorganic fillers (such as calcium carbonate, talc and silica), thixotropic agents, stabilizer agents (antioxidants and U.V.-light absorbers), other catalysts, and adhesion promoters.

The compositions of the present invention is indowed with the capability of crosslinking, under the ambient conditions of temperature and humidity, in an unexpectedly fast way, so to result no longer flowing after the first hour, and completely crosslinked after 48 hours.

In order to obtain such desirable results, the presence of the catalyst ((C) components) is essential, in that it was observed that compositions lacking this component were not yet crosslinked after 30 days of exposure to the ambient conditions of temperature and humidity.

The compositions of the present invention, use a polycarbonate elestomeric basis, are useful as sealants endowed with a high resistance to oxidation, to hydrolysis and to U.V. light, and to ageing in general, in such application sectors as of building and car industry.

The following experimental examples are illustrative and not limitative of the scope of the present invention.

Example 1

a) Preparation of polycarbonate-urethane-α,ω-(p-nonyl-phenyl)-carbamate

A polycarbonate-diol is prepared by copolymerization of diallylcarbonate with a mixture of diols: hexanediol-1,6/decanediol-1,10/pentanediol-1,5 in the molar ratio to each other of 4.490/1.634/1, according to the general procedure as reported in the above disclosure. The so-obtained polycarbonate-diol shows the following characteristics:

- number average molecular weight: $M_n$ = 1,860
- content of alcoholic hydroxyls: 1.83% by weight
- ethylenic unsaturations: 0.03 meq/g
- viscosity (at 25°C) 24.0 Pa.s
- glass transition temperature: -51°C

The so-obtained polycarbonate-diol (300 g; 0.323 -OH mol) is reacted with isophorone-diisocyanate (75.1 g; 0.675 -NCO mol) in tetrahydrofuran (45 ml) in the presence of tin dibutyldilaurate (1.5 g). The reaction is carried out at 65-67°C, until the disappearance of the hydroxy absorption band (I.R.; 3,380 $cm^{-1}$). The required time is of 3-4 hours. To the reaction mixture p-nonylphenol (77.4 g; 0.351 mol) is then added, and the reaction is continued at the same temperature, for a further 4 hours, until the disappearance of the I.R. absorption band of isocyanate group from the reaction mixture. Thus the polycarbonate-urethane-α,ω-(p- nonylphenyl)-carbamate is obtained, which, after the removal of tetrahydrofuran by evaporation under reduced pressure, shows a viscosity value of 360 Pa.s 40°C.

b) Preparation of a compound of formula (III)

Diethylenetriamine (103.2 g; 1.0 mol), cyclohexanone (237.5 g, 2.42 mol), sulphoned acidic resin AMBERLYS(R) 15-N (20 g) and benzene (200 ml) are refluxed, with an efficacious stirring, inside a flask equipped with a MARKUSSON head outfit. The reaction is allowed to proceed over 1.5 hours, after which time 36 g (2 mol) of water result to have azetotropically distilled.

The reaction product is filterd, as a benzene solution, in an anydrous environment (over fritted filter).

Half of the filtrate solution (corresponding to 0.5 mol of the inititially charged amine) is charged, by operating under a nitrogen atmosphere, to a flask equipped with stirrer, thermometer and dripping funnel, inside which anhydrous triethylamine (101 g; 2.1 mol) was charged. The flask is cooled by means of an ice bath and from the dripping funnel dimethylchlorosilane (32.3 g; 0.25 mol) is gradually added during one hour, with the mass being kept stirred, and with temperature be so controlled as not to exceed +5°C.

At the end of the addition, the mass is allowed to warm to room temperature and is left standing overnight. The triethylamine hydrochloride (69 g), formed as a reaction byproduct, is filtered over a fritted glass filter, by operaing under a nitrogen atmosphere, is washed on the filter with anhydrous benzene (2 × 50 ml) and the combined filtrate and washes are submitted to evaporation under reduced pressure and at 60°C, to the purpose of removing benzene and unreacted triethylamine.

In this way 140 g (yield 98% of theoretical) is obtained of a moderately viscous oil, of pale yellow colour, and with a specific gravity of about 1 g/ml, corresponding to the compound of formula:

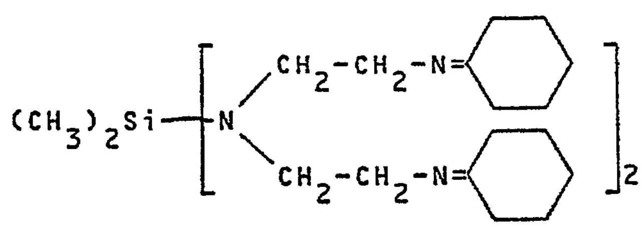

Elemental analysis for $C_{34}H_{62}N_6Si$ (molecular weight 582).

Theoretical: C, 70.1%; H, 10.7%; N, 14.4%

Found: C, 71.4%; H, 10.7%; N, 13.8%; Cl, 0.1%.

c) Preparation of a compound of fomula (II)

The preparation is carried out according to the general conditions as of above part (b), by reacting with each other diethylenetriamine (103.2 g; 1 mol) and cyclohexanone (356.3 g; 3.63 mol), in the presence of resin AMBERLYST(R) 15H (20g), in benzen (200 ml), with water (54 g; 3 mol) being azeotropically distilled over a time of 8–8.5 hours.

After the resing being filtered off, the filtrate is submitted to evaporation at 80°C and under reduced pressure to the purpose of eliminating benzene and excess cyclohexanone, with 372 g being obtained of an oil of yellow-orange colour, having a specific gravity of 0.992 g/ml, corresponding to the compound of formula:

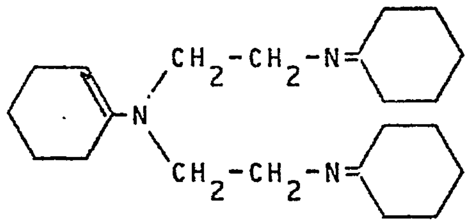

(raw formula $C_{22}H_{37}N_3$; molecular weight 343), impure due to the presence of cyclohexanone. This product can be purified by distillation (boiling point 160–170°C under about 0.2 torr), however it is used as such in the following examples.

d) Preparation of the Fluid and Crosslinkable Composition

To the polymer disclosed in the above part (a) (56 g). heated at 55°C, the following additives are added:
- U.V. ADSORB SV (stabilizer belonging to the class of benzophenones);
- IRGANOX(R) 1076 (octadecyl beta-(3,5-ditert.butyl-4hydroxyphenyl)-propanoate);
each one in the amount of 1% by weight, as referred to the same polymer. After cooling to 40°C, the tetrakisketiminosilazane (4.22 g; 7.0% by weight relatively to the polymer), prepared as disclosed in the above part (b), as the crosslinking agent, and 1,5-diazabicyclo(5.4.0)-undec-7-ene (0.28 g; 0.5% by weight relatively to the polymer), as the crosslinking catalyst, are added.

After homogenization and degassing under reduced pressure and at 40°C, the fluid composition is spread on an aluminum plate (20x20 cm), up to a 2-mm thickness, and is submitted to crosslinking by exposure to the ambient humidity, for 30 days, under ambient conditions of temperature and humidity (20-24°C; 70% relative humidity). This sample is indicated as A sample.

In a similary way, the B sample is prepared, by using, as the crosslinking agent, the bisketiminoenamine of the above part (C) (4.98 g; 8.9% by weight relatively to polymer).

On the hardened samples, the following characteristics are measured:
ultimate tensile strenght, as kPa (kg/cm2), measured according to ASTM D-412 Standard;
Modulus: elastic modulus, 100% elongation, as kPa (kg/cm2), measured according to ASTM D-412 Standard;
Elongation: % elongation at break, measured according to ASTM D-412 Standard;
Shear strength, expressed as N/cm kg/cm, measured according to ASTM D-624 Standard;
D: Shore A hardness, measured according to ASTM D-2240 Standard;
gel: expressed as % by weight, measured as the insoluble fraction in solvent (% by weight).
The results of these measurements are reported in following Table 1.

TABLE 1

| SAMPLES | A | B |
|---|---|---|
| Tensile Strength | 2443,80 kPa (24,92 kg/cm$^2$) | 2275,13 kPa (23,2 kg/cm$^2$) |
| Modulus at 100% el. | 379,51 kPa (3,87 kg/cm$^2$) | 374,61 kPa (3,82 kg/cm$^2$) |
| Elongation at break | 572% | 531% |
| Shear Strength | 68,64 N/cm (7,0 kg/cm) | 79,43 N/cm (8,1 kg/cm) |
| Shore A hardness | 29 | 33 |
| Gel | 64,3% | 66,9% |

Both the A and the B samples show a setting time lower than 24 hours.

In the absence of a crosslinking catalyst, A Sample and B Sample did not crosslink and could not be separated from the plate they had been spread on.

The replacement of diazabicyclooctane (DABCO) and triethylenediamine and ranging from 0.5 to 2% by weight, relatively to the weight of the polymer, did not yield useful results.

The replacement of the crosslinking catalyst with tin dibutyldilaurate and with dibutyloctanoate, in an amount of from 0.5 to 2% by weight relatively to the polymer did not yield useful results.

The results were still unuseful by replacing the crosslinking agent with the combination of tin dibutyldilaurate – dimethylbenzylamine.

Example 2

Preparation of polycarbonate-urethane-α,ω-(p-nonyl-phenyl)-carbamale

By means of the copolymerization of diallylcarbonate with a mixutre of pentanediol-1,5 and hexanediol-1,6 (mol ratio 1:1), a polycarbonate-diol is prepared, which has the following characteristics:

- number average molecular weight: $M_n$ 1860
- content of alcoholic hydroxyls: 1.83% by weight
- ethylenic unsaturation: 0.03 meq/g
- viscosity (at 25°C): 43.5 Pa.s
- glass transition temperature –56°C

This polymer (400 g) is reacted with isophoronediisocyanate (99.9 g; 0.449 mol) in tetrahydrofuran (250 ml), using tin dibutyldilaurate (2.0 g) as the catalyst, and the reaction product is made interact with p-nonylphenol (102 g; 0.463 mol), by operating according to the general directions as of part (a) of Example 1. The so-obtained polycarbonate-urethane-α,ω-(p-nonylphenyl)-carbamate has a viscosity at 25°C, in the absence of solvent, of 930 Pa.s.

To an aliquot of the polymer prepared as above disclosed, as a solution in tetrahydrofuran, corresponding to 45 g of polymer, U.V. ADSORB SV and IRGANOX(®) 1076 (both fo them in an amount of 0.25% by weight relatively to the polymer), tetrakisketiminosilazane (2.06 g; 4.5% by weight relatively to the polymer), prepared as disclosed in part (b) of Example 1 (as the crosslinking agent) and 1,5-diazabicyclo(5.4.0)undec-7-ene (0.23 g; 0.5% by weight relatively to the polymer) as the crosslinking catalyst are added.

After homogenizing and degassing under reduced pressure, the fluid composition is spread on an aluminum plate, (20 x 20 cm) and is submitted to setting under the conditions as disclosed in part (d) of Example 1. This sample is indicated as C Sample.

Also the D Sample, similar to C Sample, but containing an amount of 3.1 g (6.9% by weight relatively to the polymer) of crosslinking agent, is prepared and set.

The results of the measurements on hardened C and D Samples are shown in the following Table 2.

TABLE 2

| SAMPLES | C | D |
|---|---|---|
| Tensile Strength | 2181,96 kPa (22,25 kg/cm$^2$) | 2333,97 kPa (23,8 kg/cm$^2$) |
| Modulus at 100% el. | 278,50 kPa (3,87 kg/cm$^2$) | 518,76 kPa (5,29 kg/cm$^2$) |
| Elongation at break | 567% | 430% |
| Shear Strength | 72,17 N/cm (7,36 kg/cm) | 80,80 N/cm (8,24 kg/cm) |
| Shore A hardness | 24 | 31 |
| Gel | 69,7% | 68,7% |

By operating in the absence of the crosslinking catalyst, in practice no crosslinking took place and hence it was not possible to measure the characteristics of such samples.

By replacing the above-indicated crosslinking catalyst with the alternative crosslinking catalysts of Example 1, negative results were still obtained.

Example 3

a) Preparation of Poly(propyleneoxide)-urethane-α,ω-(p-nonyl-phenyl)-carbamate

A poly(propyleneoxide)-diol, having a content of alcoholic hydroxyls equal to 0.17% by weight, and a number average molecular weight of 2,000 (100 g), is reacted in tetrahydrofuran with isophoronediisocyanate (23.1 g; 1.04 mol), in the presence of tin dibutyldilaurate (0.80 g) under the general conditions as of part (a) of Example 1.

After the disappearance from I.R. spectrum of the hydroxyl absorption bands, p-nonylpenol (27.6 g; 1,250 mol) is added and the reaction is carried out until the disappearance from I.R. spectrum of the isocyanate group absorption band. Thus the poly(propyleneoxide)-urethane-α,ω-(p-nonylphenyl)-carbamate is obtained, with a viscosity (at 25°C) of 30.6 Pa.s; to it, U.V. ABSORB SV and IRGANOX(R) 1076 are added, both in the amount of 1% by weight relatively to same polymer.

b) Preparation of Hexakisketiminosilazane

Half of the solution obtained by reacting diethylenetriamine (103.2 g) and cyclohexanone (237.5 g), obtained as disclosed in part (b) of Example 1 (corresponding to 0.5 mol of the initially charged amine) is charged to a glass flask equipped with mechanical stirrer, nitrogen inlet system, thermometer, dripping funnel and reflux condenser.

By operating under a nitrogen atmosphere, to the flask anhydrous triethylamine (101.2 g; 1.0 mol) is charged, and, after cooling to +5°C, vinyltrichlorosilane (7.1 g; 0.168 mol) is added through the dripping funnel, during a time of about one hour, with the temperature of the mass being maintained at 7–8°C.

At the end of the addition, the temperature of the mass is increased to 35–40°C and the mass is stirred for a further 4 hours. After standing overnight under ambient conditions, triethylamine hydrochloride is filtered off by using a fritted glass filter, by operating under a nitrogen atmosphere, and the precipitate is washed twice with benzene. The combined filtrate and washes are submitted to evaporation under reduced pressure 0,2666 hPa (0.2 torr) to the purpose of removing benzene and unreacted triethylamine.

In this way, 124 g (yield 89.9% of the theoretical value) is obtained of a very viscous oil, of yellow colour, and with a specific gravity of 1.05 g/ml, corresponding to the hexakisketiiminosilazane of formula:

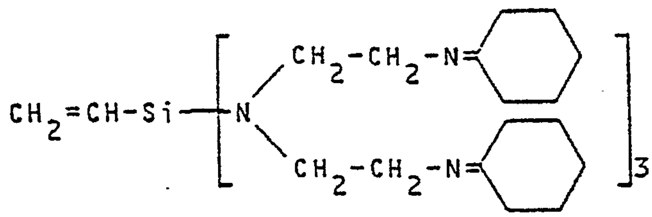

Elemental analysis for $C_{50}H_{87}N_9Si$ (molecular weight 841):

| | | | |
|---|---|---|---|
| Theoretical: | C, 71.3% | H, 10.3% | N, 15.0% |
| Found: | C, 72.3% | H, 10.3% | N, 15.0%. |

c) Preparation of the Fluid and Crosslinkable Composition

The solution of the polymer in tetrahydrofuran obtained in the part (a) of present Example is subdivided into three parts, each containing about 50 g of polymer. With this aliquots, the E Sample (addition of 3.98 g of bisketiminoenamine of part (c) of Example 1 and 0.5 g of 1,5-diazabicyclo(5.4.0)undec-7-ene); the F Sample (addition of 3.37 g of tetrakisketiminosilazane of part (b) of Example 1 and 0.5 g of 1,5-diazabicyclo(4.3.0)non-5-ene); and G Sample (addition of 3.25 g of hexakisketiminosilazane of part (b) of the present Example and 0.5 g of 1,5-diazabicyclo(5.4.0)undec-7-ene are respectively prepared.

These samples are spread and crosslinked as disclosed in Example 1, and on the crosslinked samples the characteristics as reported in following Table 3 are measured.

TABLE 3

| | |
|---|---|
| Tensile Strength: | |
| For Sample E | 739,41 kPa (7,54 kg/cm$^2$) |
| For Sample F | 760,99 kPa (7,76 kg/cm$^2$) |
| For Sample G | 1092,45 kPa (11,14 kg/cm$^2$) |
| Modulus: | |
| For Sample E | 317,73 kPa (3,24 kg/cm$^2$) |
| For Sample F | 492,29 kPa (5,02 kg/cm$^2$) |
| For Sample G | 498,1 kPa (5,08 kg/cm$^2$) |
| Elongation | |
| For Sample E; 303%; for Sample F 182%; for Sample G 254% | |
| Shear Strength: | |
| For Sample E | 47,17 N/cm (4,81 kg/cm) |
| For Sample F | 55,89 N/cm (5,70 kg/cm) |
| For Sample G | 63,74 N/m (6,5 kg/m) |
| Shore A hardness: | |
| For Sample E; 14; for Sample F 26; for Sample G 26 | |
| Gel: | |
| For Sample E; 75,6%; For Sample F 81,7%; For Sample G 81,5% | |

In the absence of the crosslinking agent, none of the three samples was capable of yielding hardened products under the ambient conditions. The addition of the traditional crosslinking catalysts reported in Example 1 gave negative results.

Example 4

The polycarbonate-diol of Example 2 (80 g) and diphenylmethane-diisocyanate (21.3 g; 86.6 mmol) are reacted in tetrahydrofuran (50 ml) in the presence of tin dibutyldilaurate (0.4% by weight relatively to the prepolymer) under the general conditions of Example 1, part (a). After the disappearance of the hydroxy groups from I.R. spectrum, p-nonylphenol (19.1 g; 85.6 mmol) diluted in tetrahydrofuran (20 ml) is added. The reaction is continued until the disappearance of isocyanate group, as determined by I.R. spectrometry, a polycarbonate-urethane-α,ω-(p-nonylphenol)-carbamate polymer having a viscosity at 40°C of 308 Pa.s being obtained.

To such a polymer, U.V. ASSORB VS (0.5% by weight) and IRGANOX(R) 1076 (0.3% by weight) are added and the polymer is then subdivided into two equal portions, each containing about 55 g of the polymer. With these portions, the H Sample (addition of 4.75 g of bisketiminoenamine of part (c) of Example 1 and 0.41 g of 1,5-diazabicyclo(4.3.0)non-5-ene) and the I Sample(addition of 4.75 g of bisketimine of part (c) of Example 1 and 0.8 g of 1,5-diazabicyclo(5.4.0)undec-7-ene were prepared.

These samples are spread and crosslinked as disclosed in Example 1, and on the crosslinked samples the characteristics as reported in following Table 4 are measured.

TABLE 4

| SAMPLES | H | I |
|---|---|---|
| Tensile Strength | 4589,48 kPa (44,08 kg/cm$^2$) | 6026,15 kPa (61,45 kg/cm$^2$) |
| Modulus | 1450,39 kPa (14,79 kg/cm$^2$) | 1350,36 kPa (13,37 kg/cm$^2$) |
| Elongation at break | 275% | 358% |

The Shear Strength, the Shore A hardness and the gel percentage were not determined.

Example 5

(Ageing test)

Polycarbonate terminated by arylcarbamic groups according to Example 2 (paragraph d), using the expedient of making no antioxidant addition.

After cross-linking under the conditions already set forth, the product had the following characteristic:

Tensile strength 2255,52 kPa (23 kg/cm2)
Modulus 686,46 kPa ( 7 kg/cm2)
Elongation 500% at break

Such a product was placed in a U.V.-CON Weatherometer and, after 28 days of accelerated ageing, the following characteristics were found on the aged product:

Tensile strength 2157,45 kPa (22 kg/cm2)
Modulus 588,39 kPa ( 6 kg/cm2)
Elongation 550% at break

Under the same conditions, composition which contained an elastomeric polymer composed of a polyether and polyester elastomeric base were completely degraded.

**Claims for the Contracting States BE, CH, DE, FR, GB, GR, IT, LI, LU, NL, SE**

1. Selant elastomeric fluid compositions which can be cross-linked under ambient temperature and humidity conditions, comprising:

A) an elastomeric polymer consisting of an elastomeric base of aliphatic polycarbonate bearing functional phenylcarbamate or substituted phenylcarbamate groups and having a molecular weight from 500 to 3,000;

B) a compound selected from among:

– compounds having the general formula:

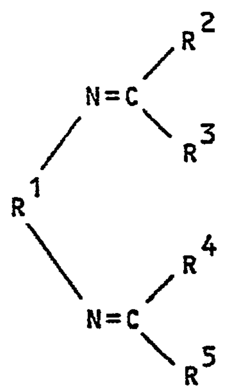

(I)

– compounds having the general formula:

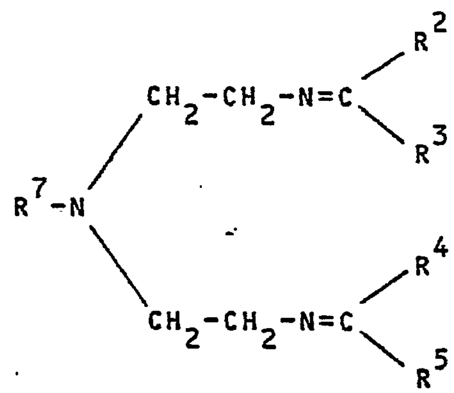

(II)

– compounds having the general formula:

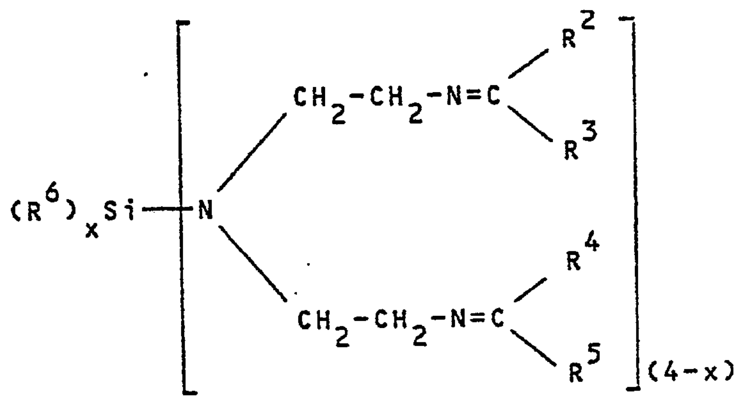

(III)

wherein:
$R^1$ is an alkylene group having from 1 to 10 carbon atoms;
$R^2$, $R^3$, $R^4$ and $R^5$ are, independently from each other, an alkyl group of from 1 to 10 carbon atoms, or the couples $R^2$–$R^3$, and $R^4$–$R^5$, considered conjointly with the carbon atoms whereto they are bonded, form a 5-membered, or a 6-membered cycloaliphatic ring;
$R^6$ is selected from among groups containing from 1 to 10 carbon atoms, the vinyl group and the phenyl group;
$R^7$ is a cyclopentene or a cyclohexene radical, and
$\underline{x}$ is 1 or 2;
C) a compound having the general formula:

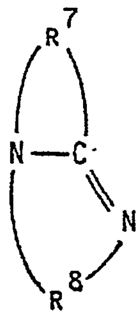

(IV)

wherein:
$R^7$ and $R^8$ are optionally alkyl- or aryl substituted alkylenes containing from 3 to 5 carbon atoms, or either $R^7$ or $R^8$ is the $-(CH_2)_3-NH$ radical.

2. Composition according to claim 1, wherein the (A) component is the reaction product of a polycarbonate diol or polyol with an aliphatic isocyanate, having an isocyanate termination, subsequently reacted with an optionally substituted phenol to block the isocyanate end groups.

3. Composition according to claim 1, wherein, in the compound B):
$R^1$ is ethylidene;
$R^2$, $R^3$ and $R^4$, $R^5$ conjointly represent the cyclohexane radical;
$R^6$ is a vinyl or a methyl group;
$R^7$ is the cyclohexene radical, and
$\underline{x}$ is either 1 or 2.

4. Composition according to claim 1, wherein the component (C) is a member selected from among 1,5-diazabicyclo(4.3.0)non-5-ene, 1,5-diazabicyclo(5.4.0)undec-7-ene, 3-phenyl-1.4-diazabicyclo (4.4.0)non-4-ene, 4-phenyl-1,5-diazabicyclo(4.4.0) dec-5-ene, and 1,5,7-triazabicyclo(4.4.0)dec-5-ene.

5. Composition according to claim 1, wherein the component (B) is present in such an amount as to supply from 0.5 to 1.5 total ketimino or enamino groups for each arylcarbamate group of component (A), the (C) component being present in an amount of from 0.5 to 2.0 parts by weight per 100 parts by weight of the (A) component.

6. Composition according to claim 1, further comprising plasticizers, inorganic fillers, tixotropic agents, stabilizers, additional catalysts or adhesion promoters.

7. Use of the compositions claimed in any of claims 1 to 6 in sealant compounds which can be cross-linked under ambient temperature and relative humidity conditions.

## Claims for the Contracting States AT and ES

1. Process for preparing sealant elastomeric compositions which can be cross-linked under ambient temperature and humidity conditions, comprising the steps of:

A) preparing an elastomeric polymer consisting of an elastomeric base of aliphatic polycarbonate bearing functional phenylcarbamate or substituted phenylcarbamate groups and having a molecular weight from 500 to 3000 by reacting an aliphatic polycarbonate diol with a diisocyanate at a temperature not higher than 75°C;

B) preparing a compound selected from among:

– compounds having the general formula:

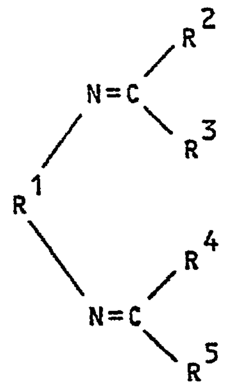

(I)

– compounds having the general formula:

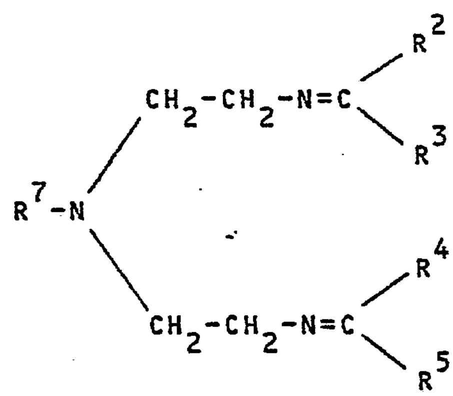

(II)

– compounds having the general formula:

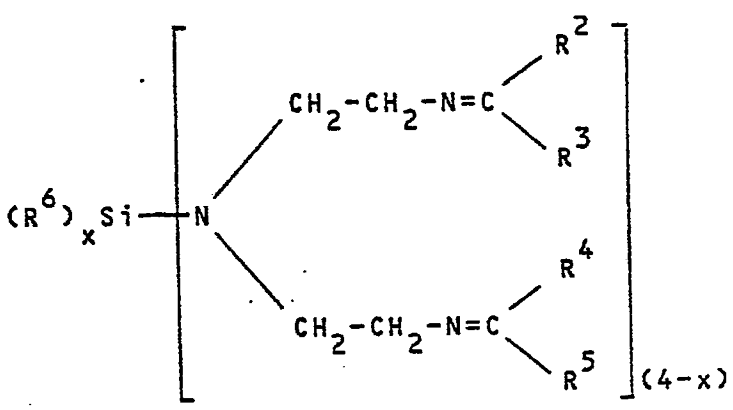

(III)

wherein:

$R^1$ is an alkylene group having from 1 to 10 carbon atoms;

$R^2$, $R^3$, $R^4$ and $R^5$ are, independently from each other, an alkyl group of from 1 to 10 carbon atoms, or the couples $R^2$–$R^3$, and $R^4$–$R^5$, considered conjointly which the carbon atoms whereto they are bond-

ed, form a 5-membered, or a 6-membered cycloaliphatic ring;
$R^6$ is selected from among alkyl groups containing from 1 to 10 carbon atoms, the vinyl group and the phenyl group;
$R^7$ is a cyclopentene or a cyclohexene radical, and
x is 1 or 2;
by reacting an amine selected from among ethylenediamine, triethylenediamine, piperazine, the addition product of two piperazine molecules and one molecule of adipic acid, and diethylenetriamine, with a carbonyl compound selected from among cyclopentanone, cyclohexanone, acetone and methylethylketone, optionally further reacting the ketimine-amino intermediate with a silylating compound selected from among halosilanes, alkoxysilanes and silicon hydrides;
C) preparing a compound having the general fromula:

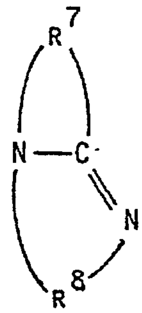

(IV)

wherein:
$R^7$ and $R^8$ are optionally alkyl- or aryl substituted alkylenes containing from 3 to 5 carbon atoms, or either $R^7$ or $R^8$ is the $-(CH_2)_3-NH$ radical.

2. Process according to claim 1, wherein the component obtained in stage (A) is the reaction product of a polycarbonate diol or polyol with an aliphatic isocyanate, having an isocyanate termination, subsequently reacted with an optionally substituted phenol to block the isocyanate end groups.

3. Process according to claim 1, wherein, in the compound obtained in stage (B):
$R^1$ is ethylidene;
$R^2$, $R^3$ and $R^4$, $R^5$ conjointly represent the cyclohexane radical;
$R^6$ is a vinyl or a methyl group;
$R^7$ is the cyclohexene radical, and
x is either 1 or 2.

4. Process according to claim 1, wherein the compound obtained in stage (C) is a member selected from among 1,5-diazabicyclo(4.3.0)non-5-ene, 1,5-diazabicyclo(5.4.0)undec-7-ene, 3-phenyl-1,4-diazabicyclo(4.3.0)non-4-ene, 4-phenyl-1,5-diazabicyclo(4.4.0)dec-5-ene, and 1,5,7-triazabicyclo(4.4.0)dec-5-ene.

5. Process according to claim 1, wherein the compound obtained in stage (B) is present in such an amount as to supply from 0.5 to 1.5 total ketimino or enamino groups for each arylcarbonate group of the component obtained in stage (A), the component obtained in stage (C) being present in an amount of from 0.5 to 2.0 part by weight per 100 parts by weight of the polymer obtained in stage (A).

6. Process according to claim 1, wherein plasticizers, inorganic fillers, tixotropic agents, stabilizers, additional catalysts or adhesion promoters are further introduced in stage (D).

**Patentansprüche für die Vertragsstaaten BE, CH, DE, FR, GB, GR, IT, LI, LU, NL, SE**

1. Elastomere fließfähige Dichtmassenzusammensetzungen, die unter Umgebungsbedingungen hinsichtlich Temperatur und Feuchtigkeit vernetzt werden können, umfassend:
A) ein elastomeres Polymer, bestehend aus einer elastomeren Basis aus aliphatischem Polycarbonat, das funktionelle Phenylcarbamatgruppen oder substituierte Phenylcarbamatgruppen trägt und ein Molekulargewicht von 500 bis 3000 aufweist;
B) eine Verbindung, ausgewählt unter:
– Verbindungen mit der allgemeinen Formel:

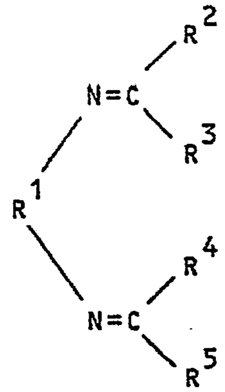

(I)

– Verbindungen mit der allgemeinen Formel:

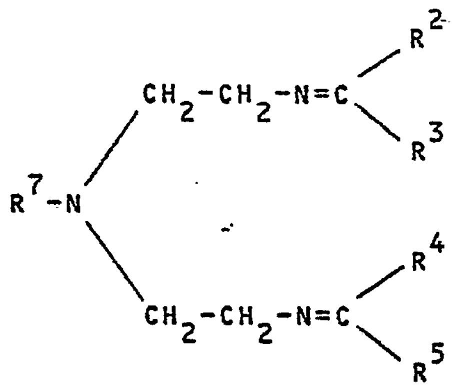

(II)

und
– Verbindungen mit der allgemeinen Formel:

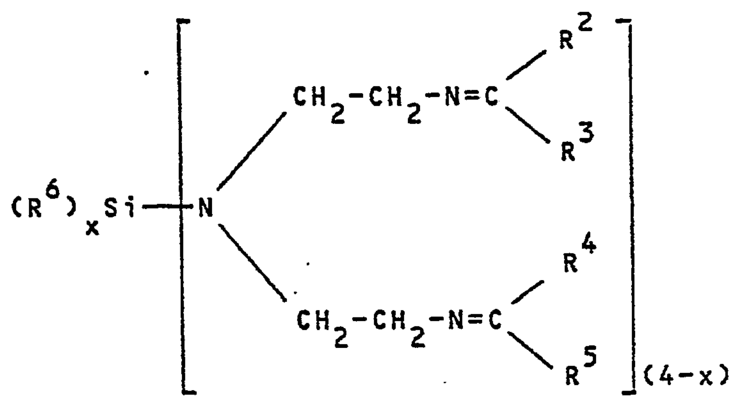

(III)

worin:
$R^1$ eine Alkylengruppe mit 1 bis 10 Kohlenstoffatomen bedeutet;
$R^2$, $R^3$, $R^4$ und $R^5$, unabhängig voneinander, eine Alkylgruppe mit 1 bis 10 Kohlenstoffatomen darstellen oder die Paare $R^2$–$R^3$ und $R^4$–$R^5$, zusammen mit den Kohlenstoffatomen, an die sie gebunden sind, einen 5-gliedrigen oder einen 6-gliedrigen cycloaliphatischen Ring ausbilden;
$R^6$ unter Alkylgruppen mit 1 bis 10 Kohlenstoffatomen, der Vinylgruppe und der Phenylgruppe ausgewählt ist;
$R^7$ eine Cyclopenten- oder einen Cyclohexenrest darstellt, und
x den Wert 1 oder 2 aufweist;
C) eine Verbindung mit der allgemeinen Formel:

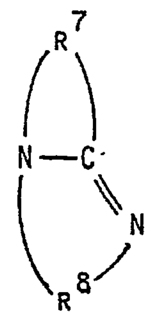

(IV)

worin:
$R^7$ und $R^8$ gegebenenfalls Alkyl- oder Aryl-substituierte Alkylene mit 3 bis 5 Kohlenstoffatomen darstellen oder entweder $R^7$ oder $R^8$ den $-(CH_2)_3-NH$-Rest bedeutet.

2. Zusammensetzung nach Anspruch 1, worin die Komponente (A) das Reaktionsprodukt eines Polycarbonatdiols oder -polyols mit einem aliphatischen Isocyanat ist und ein Isocyanatende aufweist, das anschließend mit einem gegebenenfalls substituierten Phenol zum Blockieren der Isocyanatendgruppen umgesetzt worden ist.

3. Zusammensetzung nach Anspruch 1, worin in der Verbindung (B):
$R^1$ für Ethyliden steht;
$R^2$, $R^3$ bzw. $R^4$ und $R^5$ gemeinsam den Cyclohexanrest bedeuten;
$R^6$ eine Vinylgruppe oder eine Methylgruppe darstellt;
$R^7$ den Cyclohexenrest bedeutet und
x entweder den Wert 1 oder den Wert 2 aufweist.

4. Zusammensetzung nach Anspruch 1, worin die Komponente (C) ein unter 1,5-Diazabicyclo(4.3.0)non-5-en, 1,5-Diazabicyclo(5.4.0)undec-7-en, 3-Phenyl-1,4-diazabicyclo(4.3.0)non-4-en, 4-Phenyl-1,5-diazabicyclo-(4.4.0)dec-5-en und 1,5,7-Triazabicyclo(4.4.0)dec-5-en ausgewähltes Glied ist.

5. Zusammensetzung nach Anspruch 1, worin die Komponente (B) in einer solchen Menge vorhanden ist, daß für jede Arylcarbamatgruppe der Komponente (A) insgesamt 0,5 bis 1,5 Ketimino- oder Enaminogruppen zur Verfügung gestellt werden, und die Komponente (C) in einer Menge von 0,5 bis 2,0 Gewichtsteilen je 100 Gewichtsteile der Komponente (A) vorliegt.

6. Zusammensetzung nach Anspruch 1, welche weiterhin Weichmacher, anorganische Füllstoffe, thixotrope Mittel, Stabilisatoren, zusätzliche Katalysatoren oder Adhäsionspromotoren umfaßt.

7. Verwendung der in einem der Ansprüche 1 bis 6 beanspruchten Zusammensetzungen in Dichtmassen, die unter Umgebungsbedingungen hinsichtlich Temperatur und relativer Feuchtigkeit vernetzt werden können.

**Revendications pour les Etats Contractants BE, CH, DE, FR, GB, GR, IT, LI, LU, NL, SE**

1. Compositions fluides d'élastomère pour joints étanches, qui peuvent être réticulées dans des conditions ambiantes de température et d'humidité, comprenant:
A) un polymère élastomère constitué d'une base élastomère en un polycarbonate aliphatique, portant des groupes fonctionnels phénylcarbamates substitués ou non, et présentant une masse moléculaire de 500 à 3000;
B) un composé choisi parmi:
– les composés de formule générale:

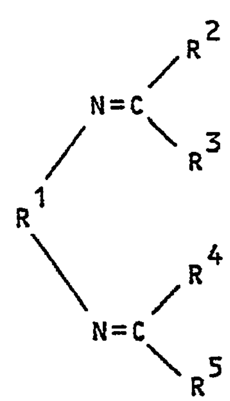

(I)

– les composés de formule générale:

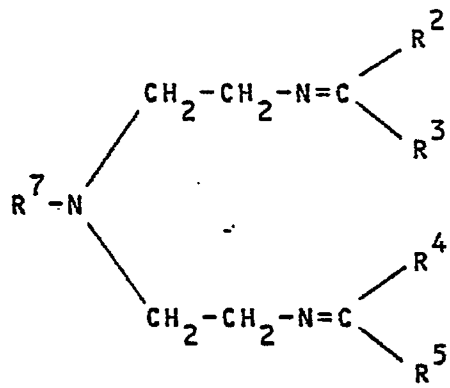

(II)

– les composés de formule générale:

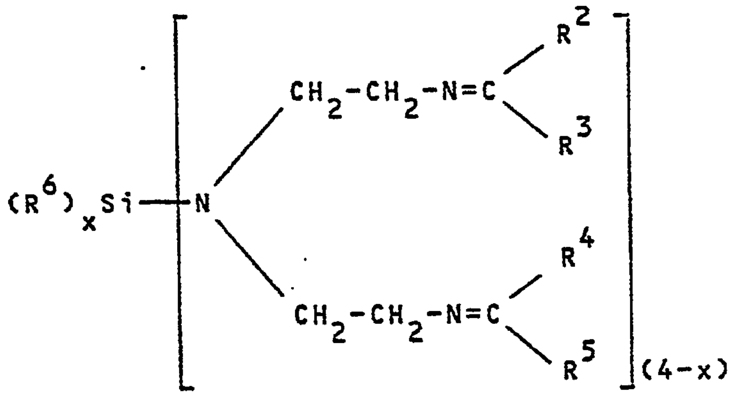

(III)

dans lesquelles
$R^1$ est un groupe alkylène comportant de 1 à 10 atomes de carbone;
$R^2$, $R^3$, $R^4$ et $R^5$ représentent, chacun indépendamment des autres, un groupe alkyle comportant de 1 à 10 atomes de carbone, ou bien les couples $R^2$–$R^3$ et $R^4$–$R^5$, considérés conjointement avec les atomes de carbone auxquels ils sont liés, forment un noyau cycloaliphatique à 5 ou 6 chaînons;
$R^6$ est choisi parmi les groupes alkyles comportant de 1 à 10 atomes de carbone, le groupe vinyle et le groupe phényle;
$R^7$ représente un radical cyclopentène ou cyclohexène; et
x vaut 1 ou 2;
C) un composé de formule générale

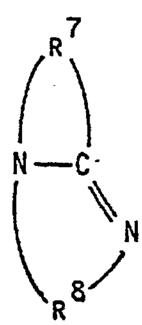

(IV)

dans laquelle:
$R^7$ et $R^8$ représentent des groupes alkylènes, comportant de 3 à 5 atomes de carbone et portant éventuellement des substituants alkyles ou aryles, ou bien $R^7$ ou $R^8$ représente le radical $-(CH_2)_3-NH-$.

2. Composition conforme à la revendication 1, dans laquelle le composant (A) est le produit de réaction d'un polycarbonate-diol ou -polyol avec un isocyanate aliphatique, qui comporte une terminaison isocyanate et que l'on fait ensuite réagir avec un phénol éventuellement substitué pour bloquer les groupes terminaux isocyanates.

3. Composition conforme à la revendication 1, dans laquelle, dans le composé B):
$R^1$ représente un groupe éthylidène;

$R^2$, $R^3$ et $R^4$, $R^5$ représentent conjointement le radical cyclohexane;
$R^6$ représente un groupe vinyle ou méthyle;
$R^7$ représente un radical cyclohexène; et
x vaut 1 ou 2.

4. Composition conforme à la revendication 1, dans laquelle le composant (C) est un composé choisi parmi 1,5-diazabicyclo(4,3,0)non-5-ène, 1,5-diazabicyclo(5,4,0)-undéc-7-ène, 3-phényl-1,4-diazabicyclo(4,3,0)non-4-ène, 4-phényl-1,5-diazabicyclo(4,4,0)déc-5-ène, et 1,5,7-triazabicyclo(4,4,0)déc-5-ène.

5. Composition conforme à la revendication 1, dans laquelle le composant (B) est présent en une quantité qui donne un total de 0,5 à 1,5 groupe cétimino ou énamino pour chaque groupe arylcarbamate du composant (A), et le composant (C) est présent en une proportion de 0,5 à 2,0 parties en poids pour 100 parties en poids du composant (A).

6. Composition conforme à la revendication 1, comprenant en outre plastifiants, charges minérales, agents de thixotropie, stabilisants, catalyseurs supplémentaires ou promoteurs d'adhérence.

7. Utilisation des compositions revendiquées dans l'une quelconque des revendications 1 à 6 dans des compositions pour joints étanches qui peuvent être réticulées dans des conditions ambiantes de température et d'humidité relative.

**Revendications pour les Etats Contractants AT, ES**

1. Procédé de préparation de compositions fluides d'élastomère pour joints étanches, qui peuvent être réticulées dans des conditions ambiantes de température et d'humidité, comprenant les étapes de:
A) préparation d'un polymère élastomère constitué d'une base élastomère en un polycarbonate aliphatique, portant des groupes fonctionnels phénylcarbamates substitués ou non, et présentant une masse moléculaire de 500 à 3000, par réaction d'un polycarbonate aliphatique avec un diisocyanate, à une température ne dépassant pas 75°C;
B) préparation d'un composé choisi parmi:
– les composes de formule générale:

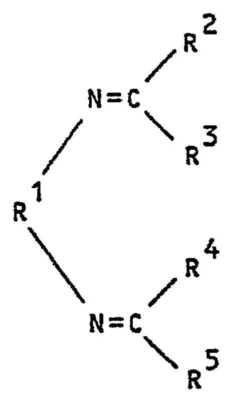

(I)

– les composés de formule générale:

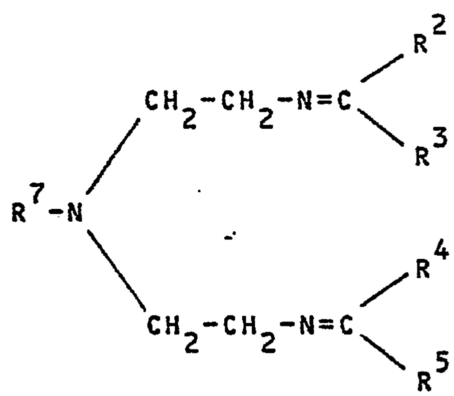

(II)

et
– les composés de formule générale:

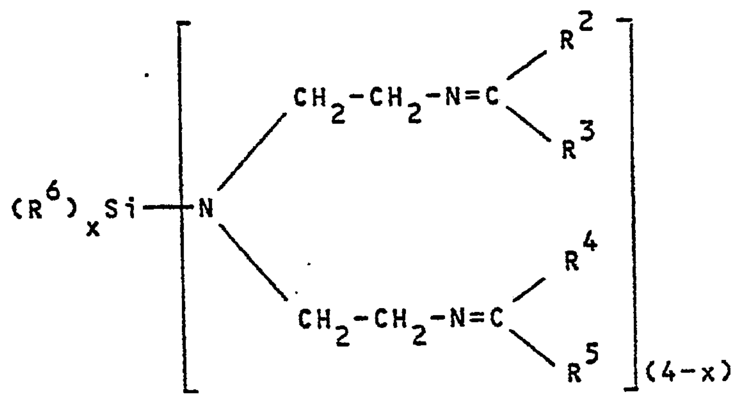

(III)

dans lesquelles
$R^1$ est un groupe alkylène comportant de 1 à 10 atomes de carbone;
$R^2$, $R^3$, $R^4$ et $R^5$ représentent, chacun indépendamment des autres, un groupe alkyle comportant de 1 à 10 atomes de carbone, ou bien les couples $R^2$–$R^3$ et $R^4$–$R^5$, considérés conjointement avec les atomes de carbone auxquels ils sont liés, forment un noyau cycloaliphatique à 5 ou 6 chaînons;
$R^6$ est choisi parmi les groupes alkyles comportant de 1 à 10 atomes de carbone, le groupe vinyle et le groupe phényle;
$R^7$ représente un radical cyclopentène ou cyclohexène; et
x vaut 1 ou 2;
par réaction d'une amine choisie parmi l'éthylènediamine, la triéthylènediamine, la pipérazine, le produit d'addition de deux molécules de pipérazine et d'une molécule d'acide adipique, et la diéthylènetriamine, avec un composé carbonylé choisi parmi la cyclopentanone, la cyclohexanone, l'acétone et la méthyl-éthyl-cétone, et éventuellement réaction ultérieure de l'intermédiaire amino-cétimine avec un agent de silylation choisi parmi les halogénosilanes, les alkoxysilanes et les hydrures de silicium:
C) préparaition d'un composé de formule générale

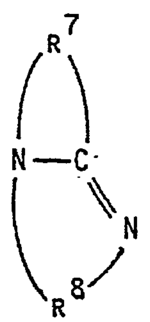

(IV)

dans laquelle:
$R^7$ et $R^8$ représentent des groupes alkylènes, comportant de 3 à 5 atomes de carbone et portant éventuellement des substituants alkyles ou aryles, ou bien $R^7$ ou $R^8$ représente le radical $-(CH_2)_3-NH-$.

2. Procédé conforme à la revendication 1, dans lequel le composant obtenu dans l'étape (A) est le produit de réaction d'un polycarbonate-diol ou -polyol avec un isocyanate aliphatique comportant une terminaison isocyanate, que l'on fait ensuite réagir avec un phénol éventuellement substitué pour bloquer les groupes terminaux isocyanates.

3. Procédé conforme à la revendication 1, dans lequel, dans le composé obtenu dans l'étape (B):
$R^1$ représente un groupe éthylidène;
$R^2$, $R^3$et $R^4$, $R^5$ représentent conjointement le radical cyclohexane;
$R^6$ représente un groupe vinyle ou méthyle;
$R^7$ représente un radical cyclohexène; et
x vaut 1 ou 2.

4. Procédé conforme à la revendication 1, dans lequel le composant obtenu dans l'étape (C) est un composé choisi parmi 1,5-diazabicyclo(4,3,0)non-5-ène, 1,5-diazabicyclo(5,4,0)-undéc-7-ène, 3-phényl-1,4-diazabicyclo(4,3,0)non-4-ène, 4-phényl-1,5-diazabicyclo-(4,4,0)déc-5-ène, et 1,5,7-triazabicyclo(4,4,0)déc-5-ène.

5. Procédé conforme à la revendication 1, dans lequel le composant obtenu dans l'étape (B) est présent en une quantité qui donne un total de 0,5 à 1,5 groupe cétimino ou énamino pour chaque groupe arylcarbamate du composant obtenu dans l'étape (A), et le composant obtenu dans l'étape (C) étant présent en une proportion de 0,5 à 2,0 parties en poids pour 100 parties en poids du polymère obtenu dans l'étape (A).

6. Procédé conforme à la revendication 1, dans lequel on introduit en outre, au cours d'une étape (D) plastifiants, charges minérales, agents de thixotropie, stabilisants, catalyseurs supplémentaires ou promoteurs d'adhérence.

**Patentansprüche für die Vertragsstaaten AT, ES**

1. Verfahren zur Herstellung elastomerer fließfähiger Dichtmassenzusammensetzungen, die unter Umgebungsbedingungen hinsichtlich Temperatur und Feuchtigkeit vernetzt werden können, welches die folgenden Stufen umfaßt:

A) Herstellen eines elastomeren Polymers, bestehend aus einer elastomeren Basis aus aliphatischem Polycarbonat, das funktionelle Phenylcarbamatgruppen oder substituierte Phenylcarbamatgruppen trägt und ein Molekulargewicht von 500 bis 3000 aufweist, durch Umsetzen eines aliphatischen Polycarbonatdiols mit einem Diisocyanat bei einer nicht über 75°C liegenden Temperatur;

B) Herstellen einer Verbindung, ausgewählt unter:

– Verbindungen mit der allgemeinen Formel:

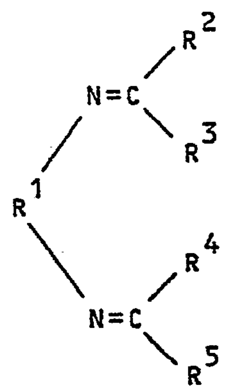

(I)

– Verbindungen mit der allgemeinen Formel:

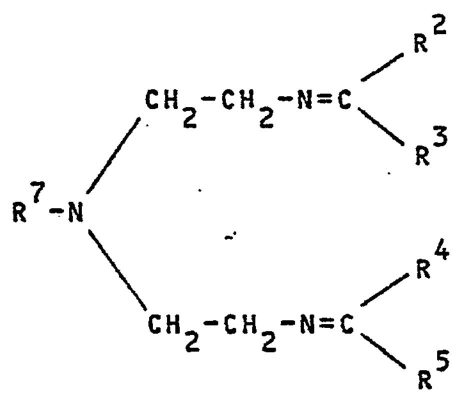

(II)

und

– Verbindungen mit der allgemeinen Formel:

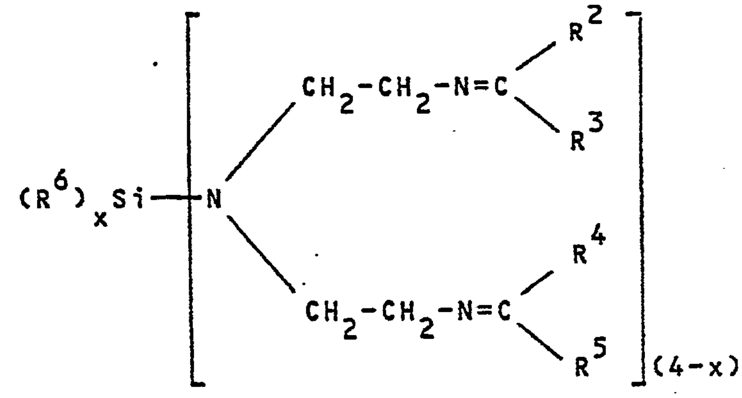

(III)

worin:

$R^1$ eine Alkylengruppe mit 1 bis 10 Kohlenstoffatomen bedeutet;

$R^2$, $R^3$, $R^4$ und $R^5$, unabhängig voneinander, eine Alkylgruppe mit 1 bis 10 Kohlenstoffatomen darstellen oder die Paare $R^2$–$R^3$ und $R^4$–$R^5$, zusammen mit den Kohlenstoffatomen, an die sie gebunden sind, einen 5-gliedrigen oder einen 6-gliedrigen cycloaliphatischen Ring ausbilden;

$R^6$ unter Alkylgruppen mit 1 bis 10 Kohlenstoffatomen, der Vinylgruppe und der Phenylgruppe ausgewählt ist;

$R^7$ einen Cyclopenten- oder einen Cyclohexenrest darstellt, und

x den Wert 1 oder 2 aufweist,

durch Umsetzen eines unter Ethylendiamin, Triethylendiamin, Piperazin, dem Additionsprodukt von zwei Piperazinmolekülen und einem Adipinsäuremolekül, und Diethylentriamin ausgewählten Amins mit einer unter Cyclopentanon, Cyclohexanon, Aceton und Methylethylketon ausgewählten Carbonylverbindung und gewünschtenfalls weiteres Umsetzen der Ketimin-amino-Zwischenverbindung mit einer unter Halogensilanen, Alkoxysilanen und Siliciumhydriden ausgewählten silylierenden Verbindung;

C) Herstellen einer Verbindung mit der allgemeinen Formel:

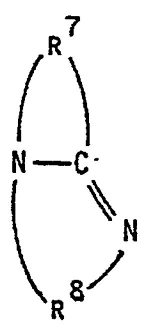

(IV)

worin:

$R^7$ und $R^8$ gegebenenfalls Alkyl- oder Aryl-substituierte Alkylene mit 3 bis 5 Kohlenstoffatomen darstellen oder entweder $R^7$ oder $R^8$ den $-(CH_2)_3-NH$-Rest bedeutet.

2. Verfahren nach Anspruch 1, worin die in Stufe (A) erhaltene Verbindung das Reaktionsprodukt eines Polycarbonatdiols oder -polyols mit einem aliphatischen Isocyanat ist und ein Isocyanatende aufweist, das anschließend mit einem gegebenenfalls substituierten Phenol zum Blockieren der Isocyanatendgruppen umgesetzt worden ist.

3. Verfahren nach Anspruch 1, worin in der in Stufe (B) erhaltenen Verbindung:

$R^1$ für Ethyliden steht;

$R^2$, $R^3$ bzw. $R^4$ und $R^5$ gemeinsam den Cyclohexanrest bedeuten;

$R^6$ eine Vinylgruppe oder eine Methylgruppe darstellt;

$R^7$ den Cyclohexenrest bedeutet und

x entweder den Wert 1 oder den Wert 2 aufweist.

4. Verfahren nach Anspruch 1, worin die in Stufe (C) erhaltene Verbindung ein unter 1,5-Diazabicyclo(4.3.0)non-5-en, 1,5-Diazabicyclo(5.4.0)-undec-7-en, 3-Phenyl-1,4-diazabicyclo(4.3.0)non-4-en, 4-Phenyl-1,5-diazabicyclo(4.4.0)dec-5-en und 1,5,7-Triazabicyclo(4.4.0)dec-5-en ausgewähltes Glied ist.

5. Verfahren nach Anspruch 1, worin die in Stufe (B) erhaltene Verbindung in einer solchen Menge vorhanden ist, daß für jede Arylcarbamatgruppe der in Stufe (A) erhaltenen Komponente insgesamt 0,5 bis 1,5 Ketimino- oder Enaminogruppen zur Verfügung gestellt werden, wobei die in Stufe (C) erhaltene Komponente in einer Menge von 0,5 bis 2,0 Gew.-Teilen je 100 Gew.-Teile des in Stufe (A) erhaltenen Polymers zugegen ist.

6. Verfahren nach Anspruch 1, worin in einer weiteren Stufe (D) Weichmacher, anorganische Füllstoffe, thixotrope Mittel, Stabilisatoren, zusätzliche Katalysatoren oder Adhäsionspromotoren eingeführt werden.